# EUROPEAN PATENT APPLICATION

(11) **EP 4 668 891 A1**
(43) Date of publication of application: **24.12.2025**
(21) Application number: 24757306.6
(22) Date of filing: 16.02.2024
(51) Int. Cl.: H04W 52/02, H04B 7/06, H04B 7/08, H04W 76/28, H04W 72/231, H04W 72/232, H04L 1/16

(54) **METHOD AND DEVICE FOR TRANSMITTING OR RECEIVING SIGNAL IN WIRELESS COMMUNICATION SYSTEM**

(30) Priority: 16.02.2023 KR 20230021067; 19.05.2023 KR 20230065139
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR)
(74) Representative: Plasseraud IP
(86) International application number: PCT/KR2024/095288
(87) International publication number: WO 2024/172588

(57) **Abstract**

A method and a device for transmitting or receiving a signal in a wireless communication system, disclosed in the present specification, operate on the basis of a cell DTX/DRX configuration and a terminal DRX configuration. Specifically, performing PDCCH monitoring during an on duration of a terminal DRX operation is considered as a basic operation, but when a DTX operation is activated and a serving cell is not on a cell DTX active duration, a terminal may not monitor a PDCCH regardless of the on duration.

## Description

### TECHNICAL FIELD

The present disclosure relates to a method and apparatus for use in a wireless communication system.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### Technical Problem

The object of the present disclosure is to provide a method and apparatus for transmitting and receiving control and data signals efficiently in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

The present disclosure provides a method and apparatus for transmitting and receiving a signal in a wireless communication system.

According to an aspect of the present disclosure, a method of transmitting and receiving a signal by a user equipment (UE) in a wireless communication system includes configuring a UE discontinuous reception (DRX) operation and a cell discontinuous transmission (DTX) operation, and monitoring a physical downlink control channel (PDCCH) during an ON duration of the UE DRX operation, and skipping the monitoring of the PDCCH regardless of the ON duration based on that the cell DTX operation is activated and a serving cell is not in a cell DTX active period

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### Advantageous Effects

According to an embodiment of the present disclosure, a communication apparatus may transmit and receive control and data signals more efficiently in a different way from the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIGS. 4 to 5 are diagrams illustrating methods for transmitting and receiving a signal according to the embodiments of the present disclosure.
FIGS. 6 to 9 illustrate devices according to an embodiment of the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

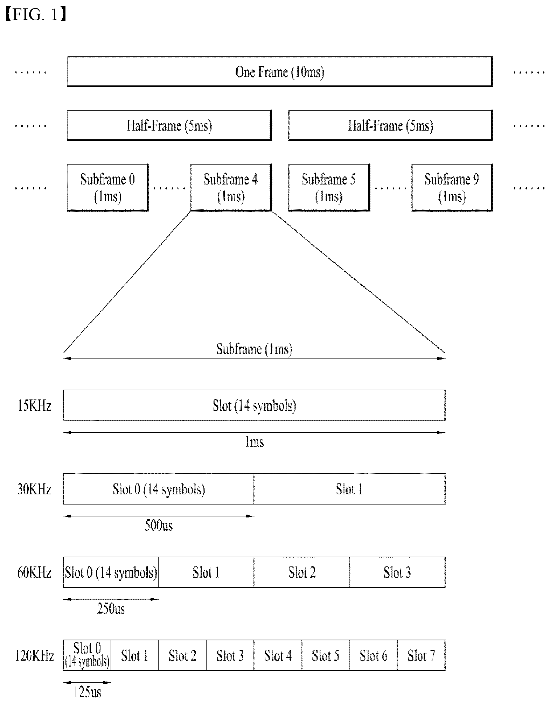

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

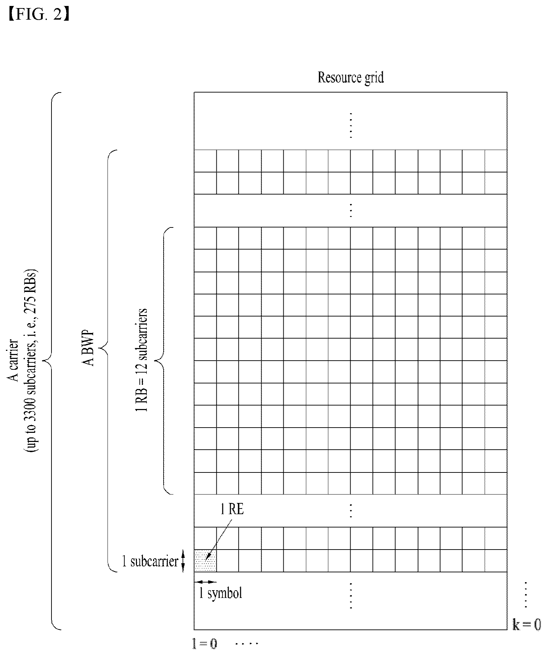

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

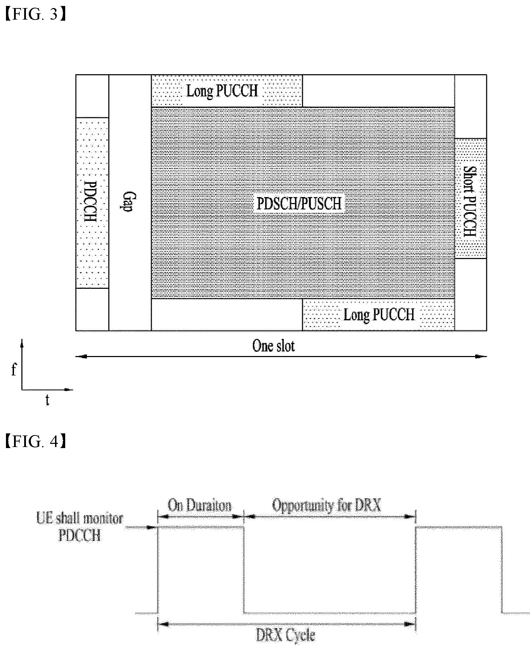

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### UL Physical Channels/Signals

### (1) PUSCH

A PUSCH may carry UL data (e.g., uplink shared channel (UL-SCH) transport block (TB)) and/or uplink control information (UCI). The PUSCH may be transmitted based on a cyclic prefix orthogonal frequency division multiplexing (CP-OFDM) waveform or a discrete Fourier transform spread OFDM (DFT-s-OFDM) waveform. When the PUSCH is transmitted based on the DFT-s-OFDM waveform, the UE may transmit the PUSCH by applying transform precoding. For example, when the transform precoding is not allowed (e.g., when the transform precoding is disabled), the UE may transmit the PUSCH based on the CP-OFDM waveform. When the transform precoding is allowed (e.g., when the transform precoding is enabled), the UE may transmit the PUSCH based on the CP-OFDM waveform or DFT-s-OFDM waveform. PUSCH transmission may be dynamically scheduled by a PDCCH (dynamic scheduling) or semi-statically scheduled by higher layer signaling (e.g., RRC signaling) (and/or Layer 1 (L1) signaling (e.g., PDCCH)) (configured scheduling (CS)). Therefore, in the dynamic scheduling, the PUSCH transmission may be associated with the PDCCH, whereas in the CS, the PUSCH transmission may not be associated with the PDCCH. The CS may include PUSCH transmission based on a Type-1 configured grant (CG) and PUSCH transmission based on a Type-2 CG. For the Type-1 CG, all parameters for PUSCH transmission may be signaled by the higher layer. For the Type-2 CG, some parameters for PUSCH transmission may be signaled by higher layers, and the rest may be signaled by the PDCCH. Basically, in the CS, the PUSCH transmission may not be associated with the PDCCH.

### (2) PUCCH

A PUCCH may carry UCI. The UCI includes the following information.
- Scheduling request (SR): The SR is information used to request a UL-SCH resource.
- Hybrid automatic repeat and request acknowledgement) (HARQ-ACK): The HARQ-ACK is a signal in response to reception of a DL signal (e.g., PDSCH, SPS release PDCCH, etc.). The HARQ-ACK response may include positive ACK (ACK), negative ACK (NACK), DTX (Discontinuous Transmission), or NACK/DTX. The HARQ-ACK may be interchangeably used with A/N, ACK/NACK, HARQ-ACK/NACK, and the like. The HARQ-ACK may be generated on a TB/CBG basis.
- Channel Status Information (CSI): The CSI is feedback information on a DL channel. The CSI includes a channel quality indicator (CQI), a rank indicator (RI), a precoding matrix indicator (PMI), a precoding type indicator (PTI), and so on.

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

### 1. Cell-specific DTX-DRX operation for energy saving

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

Energy saving of BSs has been considered as an important issue in wireless communication systems including 3GPP because it may contribute to establish eco-friendly networks by reducing carbon emissions and reducing the operational expenditure (OPEX) of communication service providers. In particular, as the introduction of 5G communications requires higher transmission rates, BSs need to be equipped with more antennas and provide services through wider bandwidths and frequency bands. This results in BS energy costs reaching as high as 20 % of total OPEX, according to recent researches. Due to this increased interest in BS energy saving, a new study item called "study on network energy savings" is approved in 3GPP NR release 18.

In detail, to improve the energy saving capability of the BS in terms of transmission and reception, the following enhancement techniques have been considered in the corresponding item.
- How to achieve more efficient operation dynamically and/or semi-statically and finer granularity adaptation of transmissions and/or receptions in one or more of network energy saving techniques in time, frequency, spatial, and power domains, with potential support/feedback from UE, and potential UE assistance information

In particular, this specification proposes a signal/channel-specific transmission/reception operation when a BS performs cell-specific discontinuous transmission (DTX)/discontinuous reception (DRX) operations in which active periods and non-active periods are periodically repeated for energy saving. A proposal is made for UE transmission/reception operations when the BS operation is combined with a DRX operation of the UE.

When the UE is initially connected to the BS and enters a connected mode, the UE needs to continuously monitor a PDCCH to check whether there is transmission scheduled for the UE in each configured search space (SS). However, if this scheduling is not always present, a battery of the UE may be quickly drained due to unnecessary PDCCH monitoring operation being performed every time. Accordingly, the BS may configure connected mode discontinuous reception (C-DRX), which is an operation that obtains a power saving effect for the UE by configuring a time duration (ON duration) during which the UE needs to perform PDCCH monitoring and a time duration (OFF duration) during which the UE does not need to perform PDCCH monitoring. In terms of the BS, C-DRX of the UE may also help ES, and a PDCCH does not need to be transmitted to a specific UE during the C-DRX OFF period of the UE, and thus the resource may be used for other purposes, and ES gains may be obtained through DTX/DRX. However, the UE may transmit data without restriction as needed in the OFF during by using pre-configured resources (e.g. SR, PUCCH, and CG-PUSCH), the BS needs to wait for UL reception of the UE, which may or may not transmit. C-DRX is configured UE-specific. DRX cycles or ON/OFF durations are not aligned between UEs within a cell, and thus if the ON duration of UEs is configured in a TDM format, the BS needs to perform PDCCH transmission for every ON period, and thus may not sleep, making it difficult to expect an ES gain.

Through a cell-specific DTX/DRX operation, the BS may completely turn off transmission/reception during specific time durations. Restrictive DTX/DRX may be used, allowing only transmission/reception of specific signals/channels. In this specification, a method for saving energy of a BS is proposed. A UE operation method for each time duration when cell DTX/DRX is combined with the DRX operation of UEs within the cell is proposed. For convenience, Cell DTX/DRX has been mainly described in terms of a combination method with a connected mode DRX (C-DRX) operation and an operation method of the UE, but it may be equally applied and expanded to other DRX operations of the terminal (e.g., Idle mode DRX) as well as C-DRX.

In the present disclosure, the fact that the BS operates in an NES mode for ES may mean, for example, that the BS preconfigures a plurality of OFF intervals (DTX intervals of the BS) to turn off transmission of a specific DL signal for a specific time interval and dynamically indicates one of the OFF intervals to indicate that the corresponding DL signal may not be transmitted during a predefined time interval, thereby operating to obtain power consumption reduction of the BS and UE. It may also mean an operation mode that reduces power consumption of the BS and UE by not performing BWP switching, dynamic RB adaptation, and the like in the frequency domain as well as in the time domain and not performing transmission and/or reception through a specific reception antenna port of the BS when the BS turns of the corresponding reception antenna port semi-statically or dynamically in the spatial domain.

The UE periodically performs PDCCH monitoring during the ON duration to check whether there is a DL/UL signal to transmit/receive. When the UE receives a PDCCH in the ON duration, the UE performs DL reception or UL transmission according to the instructions. In the case of UL transmission of the UE, regardless of C-DRX, if there is data in a UL buffer, the UE in a sleep mode may also wake up and transmit SR. For a idle mode UE, the UE may operate in idle mode DRX (I-DRX), which periodically monitors paging and enters a sleep mode again if the UE is not a target UE. Here, the meaning of the UE operating in a sleep mode may mean "regardless of the active time determined by C-DRX" or "also in a duration other than the active time determined by C-DRX." 'In a C-DRX operation, a time duration including ON and OFF durations is repeated' is defined as a DRX cycle. The length of a DRX cycle is defined as a time from start of an ON interval to start of an upcoming ON interval. The DRX cycle is divided into a long DRX cycle and a short DRX cycle. If the length of the DRX cycle becomes longer, the latency may increase because the BS needs to wait until the upcoming ON duration of the UE when a PDSCH to be transmitted by the BS occurs immediately after a specific ON duration of the UE ends. The UE does not transmit P-CSI or SRS during the OFF duration, and thus the BS may increase resource utilization by allocating the resources to other UEs. The BS may also operate in an energy saving mode to save power during the OFF duration of the UE.

A long DRX cycle and a short DRX cycle may be configured simultaneously, in which case the long DRX cycle needs to be configured to an integer multiple of the short DRX cycle (the onDurationTimer values are the same). If there is no data activity during the ON duration of the long DRX cycle (e.g., no PDCCH reception), the UE operates in a long DRX cycle. If there is data activity during the ON duration of a long DRX cycle, the UE operates in a short DRX cycle for a time duration corresponding to drx-ShortCycleTimer, and if there is no data activity during the ON duration of the short DRX cycle, the UE switches back to the long DRX cycle and operates. In this case, start of the ON duration in the short DRX cycle is determined by the drx-StartOffset and drx-SlotOffet values, similar to the long DRX cycle.

The BS may instruct the UE to enter DRX sleep directly without operating in an active mode until end of the ON duration through the DRX command MAC CE (control element). That is, the current BS may terminate the active time of the UE and enter the DRX cycle immediately. If only the long DRX cycle is configured for the UE, the UE operates only with the long DRX cycle, and if the short DRX cycle is also configured, the UE enters the short DRX cycle mode immediately after receiving the DRX command MAC CE. If the BS instructs a long DRX command MAC CE, the UE may operate in a long DRX cycle mode even if a short DRX cycle is configured.

The BS may control a starting point of a long DRX cycle through drx-LongCycleStartOffset which is an RRC parameter, and in this case, an offset value is defined in ms units such that a long DRX cycle may start at a slot boundary. The starting point of the ON duration may be configured at slot level granularity via drx-SlotOffset which is an RRC parameter. Start of the ON duration is defined as a relative position of the ON duration by applying a slot offset indicated from a reference point indicated by LongCycleStartOffset. The BS may align the ON and OFF durations of a plurality of UEs within a cell and utilize the durations for ES operation by adjusting the positions of the starting point of the DRX cycle and the starting point of the ON duration through the parameters. However, for ES through dynamic transmit/receive OFF time patterns of the BS, a more dynamic offset value indication may be required.

The UE may perform ES by waking up only in the ON duration through the C-DRX configuration and monitoring the presence or absence of PDCCH transmitted to the UE, compared to continuously monitoring PDCCH (for example, every slot). If the BS has no data to transmit in the upcoming ON duration of the UE, it may save some more battery of the UE by transmitting a WUS before the ON duration of the UE starts, indicating that there is no need to wake up in the ON duration (i.e., there is no need to start an onduration timer). When there is no data to be transmitted/received in the upcoming ON duration for the UE with C-DRX configured, the BS may transmit a WUS through DCI format 2_6 in a WUS occasion configured before the ON duration to indicate to the UE that there is no need to wake up in this ON duration. A UE that receives the WUS instruction may remain in a sleep mode without switching to an active mode, allowing more ESs.

### [Method #1] Cell DTX/DRX configuration and transmission/reception methods in non-active period

Cell DTX/DRX may include active and non-active periods. The active period is a period in which all signals and channels are transmitted/received without restrictions, similar to C-DRX structure of the UE. The non-active period is a period in which transmission/reception of all signals and channels is turned OFF, or transmission/reception of only specific signals and channels is limited. For example, only PDCCH transmission or reception such as RACH/SR PUCCH may be allowed during time durations outside the active period. Cell DTX/DRX configurations may only be configured and activated via RRC only. Alternatively, some parameters during cell DTX/DRX configuration may be configured via RRC and the remaining parameters may be configured/indicated and activated via L1/L2 signaling (e.g. (group-common) DCI/MAC-CE). Information about the location and length of the active and non-active periods of the cell DTX/DRX may be preconfigured via specific RRC parameters. For example, for an active period, the starting point may be configured via an offset relative to a specific subframe boundary or a specific SFN value, and the duration may be configured via length-related parameters or timers. In this case, it is also possible to preconfigure a plurality of parameter or timer candidates and indicate one of the candidates upon activation via L1/L2 signaling. During the cell DTX/DRX active period, all signals and channels may be transmitted/received without any special transmission/reception restrictions, like a normal operation of the BS. A time duration outside of the active period is basically considered as a non-active period, and transmission/reception may be restricted except for preconfigured signals and channels. The BS may obtain an ES gain through these minimal transmission/reception operations, and thus the cell DTX/DRX related operations may be considered as operations when the NES state/mode is ON.

The following options may be considered as a transmission/reception operation method of the BS in a cell DTX/DRX non-active period.

**[Table 4]**

| |
|---|
| - Option 1: gNB is expected to turn off all transmission and reception for data traffic and reference signal during Cell DTX/DRX non-active periods. |
| - Option 2: gNB is expected to turn off its transmission/reception only for data traffic during Cell DTX/DRX non-active periods (i.e., gNB will still transmit/receive reference signals) |
| - Option 3: gNB is expected to turn off its dynamic data transmission/reception during Cell DTX/DRX non-active periods (i.e., gNB is expected to still perform transmission/reception in periodic resources, including SPS, CG-PUSCH, SR, RACH, and SRS). |
| - Option 4: gNB is expected to only transmit reference signals (e.g., CSI-RS for measurement). |
| - Option 5: gNB is expected to turn off transmission/reception of specific signals/channels during Cell DTX/DRX non-active periods (the signal/channel to be turned on/off is pre-configured). |

Option 1 is that the BS turns off transmission/reception of all signals and channels during a non-active period. This includes transmission/reception of data traffic and reference signals such as SSB, CSI-RS, and SRS. Option 2 is that only transmission/reception related to data traffic that is dynamically scheduled or transmitted through preconfigured resources is turned OFF, and reference signals such as SSB, CSI-RS, or SRS are still transmitted/received even in the non-active period. Option 3 is an operation method in which only transmission/reception of dynamically scheduled PDSCH and PUSCH is turned OFF, and transmission/reception of transmissions such as SPS, CG-PUSCH, SR, RACH, and SRS, which are performed on preconfigured resources, is still possible. Option 4 is an operation method in which all data traffic and reference signal reception are turned OFF during the non-active period, and only reference signals are transmitted. Option 5 is a method in which the BS preconfigures the signals/channels to be turned ON/OFF for transmission/reception during the non-active period when the cell DTX/DRX is in operation, and only allows transmission/reception of signals/channels that are configured to ON. The operation method of the BS is not limited to the above options, and may operate in various cell DTX/DRX patterns, such as combinations of specific options or applying different options for different time durations, depending on the configurations/instructions. For example, depending on the pre-configuration, it is possible that option 1 operates in odd non-active periods and option 2 operates in even non-active periods, based on a specific point in time such as SFN=0.

After the BS receives a specific signal (e.g., RACH or SR) from the UE or schedules retransmission to the UE within a pre-arranged active period, the BS may extend the initially configured active period to slightly postpone the start point of the non-active period to receive messages of a RACH procedure or PDSCH scheduling or retransmission.

### [Method #2] DTX/DRX ON/OFF and operation method by cell or cell group

A specific cell or group of cells is semi-statically configured with one or a combination of candidates for the non-active period operation options of [Method #1] above by cell DTX/DRX configuration, and one of the options may be dynamically activated on a per-cell or per-cell-group basis via L1/L2 signaling (e.g. (Group-common) DCI/MAC-CE). That is, when a plurality of cells are configured for a UE, the cell DTX/DRX configuration may be configured and activated per cell or per cell group, when a specific cell or cell group is switched from general operation to NES mode/state for ES (or vice versa), the cell DTX/DRX operation may be turned ON/OFF per cell or per cell group.

In this case, RRC parameters or timers related to a maintenance time of cell DTX/DRX may be configured/instructed together for each cell or cell group. During the corresponding time, the cell DTX/DRX operation is maintained, and when the timer expires, the cell/cell group has the cell DTX/DRX turned OFF (deactivated) and returns to a normal BS operation mode, allowing all signals and channels to be transmitted/received without restriction. Alternatively, a cell/cell group that has received a deactivation configuration/instruction while the cell DTX/DRX operation is maintained may have the cell DTX/DRX turned OFF (deactivated) and return to the normal BS operation mode, allowing all signals and channels to be transmitted/received without restriction. Alternatively, if there is no separate maintenance time related configuration/instruction, the cell DTX/DRX operation may remain enabled until there is a separate instruction from the BS.

### [Method #3] Cell DTX/DTX configuration and method of configuring and operating linkage between UE C-DRXs

The BS may configure a plurality of UE C-DRXs when preconfiguring C-DRX to a UE by considering linkage between specific Cell DTX/DRX configurations and UE C-DRX configurations for each cell/cell group. When a specific cell DTX/DRX configuration is activated by RRC/L1/L2 signaling, the UE C-DRX configuration linked to the corresponding cell DTX/DRX configuration from among the UE C-DRX configurations configured for the UE may be automatically activated. For example, when UE C-DRX configuration #1 and UE C-DRX configuration #2 are configured for a UE in a specific cell, only UE C-DRX configuration #2 may be configured to be linked with cell DTX/DRX configuration #1. In this case, when the cell operates in a normal mode (i.e., normal operation, not NES operation), UE C-DRX configuration #1 is applied and operates. After the cell DTX/DRX configuration #1 is activated, the C-DRX configuration may be switched to the linked UE C-DRX configuration #2 and operate. In this case, UE C-DRX configuration #2 may be configured for a plurality of UEs within the cell. To maximize the ES gain of the BS, the start point and length of the active/non-active period of the cell DTX/DRX configuration and the start point and length of the DRX cycle or the ON duration within the DRX cycle of the UE C-DRX configuration #2 may be configured to be aligned. Alternatively, when the cell DTX/DRX configuration is activated, the drx-StartOffset and drx-SlotOffet values agreed upon in advance may be applied to UEs with C-DRX configured within the cell, and thus the DRX cycles between different UEs or the ON durations within the DRX cycle may be aligned. Alternatively, for each cell/cell group, a specific cell DTX/DRX may be automatically switched to a specific DRX group (e.g., NES group) from among a plurality of DRX groups configured for the UE. Alternatively, on a cell/cell group basis, DRX parameters previously configured for primary/secondary DRX groups may be adapted to a specific cell DTX/DRX. In this case, the BS may maximize the ES gain by aggregating PDCCHs to be transmitted to a plurality of UEs within a cell group on the time axis, transmitting the PDCCH shortly within the active time of the cell DTX/DRX operation and the ON duration of the UE C-DRX operation, and performing only the minimum transmission/reception during the inactive time and OFF duration. If the BS operates a plurality of cell DTX/DRX configuration patterns, a separate/independent UE DRX configuration #2 may be linked for each cell/cell group DTX/DRX pattern, and when a specific cell DTX/DRX is activated, the UE DRX configuration may be switched to the UE DRX configuration #2 linked to the corresponding cell DTX/DRX.

### [Method #4] UE operation method according to active/inactive time combination when cell DTX/DRX configuration and UE C-DRX configuration operate simultaneously

When both cell DTX/DRX and UE C-DRX are configured for a UE, time durations may be generated in which the active/inactive time of the cell DTX/DRX and the ON/OFF duration of the UE C-DRX are combined and adapted. A combination of {Cell DTX/DRX, UE C-DRX} may include four time durations: {ON, ON}, {ON, OFF}, {OFF, ON}, {OFF, OFF}. For each case, the UE operation may be defined differently. For example, if {Cell DTX/DRX, UE C-DRX} is {ON, ON}, the BE operates in a normal operation mode (non-NES mode), and the UE may perform operations (e.g. PDCCH monitoring) that were performed in the ON duration when the existing UE C-DRX was ON within the cell DTX/DRX activation time of the BS or may perform the same transmission/reception operations such as CSI reporting. If the UE receives a PDCCH in the ON duration of the UE C-DRX, an inactivitytimer operates, or if the UE needs to perform a retransmission, the time to maintain the active state of the UE is extended by the drx retransmission timer (drx-RetransmissionTimerDL/UL). When cell DTX/DRX is configured together and applied simultaneously, the extension of the UE C-DRX activation time may be configured to be possible only until end of the activation time of the cell DTX/DRX.

When {Cell DTX/DRX, UE C-DRX} is {ON, OFF}, the UE may perform transmission and reception operations that were possible during the OFF duration of the existing UE C-DRX within the active time of the cell DTX/DRX. For example, transmission and reception of preconfigured signals and channels such as SSB/CSI-RS reception and measurement, SPS, CG-PUSCH, SR, RACH, and SRS may be permitted.

When {Cell DTX/DRX, UE C-DRX} is {OFF, ON}, depending on an operation option in the inactive time of the BS preconfigured for each cell/cell group, the UE may not expect reception of reference signals such as SSB/CSI-RS, may not perform measurement and reporting, or may not transmit SPS, CG-PUSCH, SR, RACH, and SRS in the preset resources. That is, signal and channel-specific transmission/reception operations that are to be performed in the ON/OFF duration of the existing UE C-DRX configurations may vary depending on the operation configurations during the inactive time of the cell DTX/DRX. For example, if the cell DTX/DRX configuration is configured to Option 2 of [Method #1], the UE may not expect PDCCH reception even in the ON duration of the UE C-DRX configuration. Instead, the UE may only transmit and receive reference signals such as SSB, CSI-RS, and SRS.

Even when {Cell DTX/DRX, UE C-DRX} is {OFF, OFF}, the UE operation may vary depending on the cell DTX/DRX configurations. For example, if Option 1 of [configuration #1] is configured, even if the C-DRX configuration of the UE is in the OFF duration, the UE may not expect any DL/UL transmission/reception including signals and channels transmitted from preconfigured resources including reference signals, and may remain in a sleep state until the active time of the cell DTX/DRX arrives.

### [Method #5] Method of indicating cell DTX/DRX activation/deactivation of specific cell(s) through group common DCI (or group-common MAC-CE) and Method of configuring and transmitting PUCCH resources for HARQ-ACK feedback when a plurality of cells are configured and operate for the UE

When a plurality of cells are configured for a UE in a carrier aggregation (CA) or dual connectivity (DC) scenario, activation or deactivation of cell DTX/DRX configuration (ON/OFF patterns) for each cell may be instructed through group common DCI or MAC-CE.

In this case, the group common DCI or group common MAC CE for indicating activation/deactivation of cell DTX/DRX may be configured in a form including N bits or bit groups. Here, a value of N may be predefined or configured from the BS (to the UE). For the serving cell(s) configured in the UE, a correspondence relationship regarding which bit (or bit group) from among the N bits (or bit groups) indicates cell DTX/DRX (on/off pattern) activation/deactivation for which cell may be configured from the BS (to the UE).

When the group common DCI or MAC-CE is received, the UE may interpret the bit (group) corresponding to each cell configured to the UE and perform transmission/reception operations on the corresponding cell depending on whether the cell DTX/DRX (on/off pattern) indicated by the bit (group) is activated/deactivated.

When the BS indicates a cell index through a group common MAC CE, the UE may receive the following configurations via RRC.
- N_B: Max number of cell index bits in MAC CE
- N_C: Number of configured cells for cell DRX/DTX
- Bit position for configured cells

In this case, N_B>=N_C, and when the UE receives the configurations through RRC, the MAC layer may perform the following operations.

**[Table 5]**

| |
|---|
| If a cell index field (or a bit in the cell bitmap field) corresponds to a cell configured for cell DRX/DTX by (UE dedicated) RRC (and activated by RRC or MAC CE), the UE shall activate or deactivate the cell DRX/DTX for the cell. Otherwise (i.e. if the cell index field does not correspond to a cell configured for cell DRX/DTX by RRC or if the cell index field corresponds to a deactivated cell), the UE shall ignore the corresponding cell index field (or the corresponding bit in the cell bitmap field). The total number of the cell index fields in the MAC CE (or the size of the cell bitmap field) is configured by N_B in RRC. |
| Upon receiving the MAC CE, if the MAC CE activates or deactivates the cell DRX/DTX for any cell configured by (UE dedicated) RRC, the MAC entity shall submit confirmation to the physical layer for ACK on PUCCH. Otherwise, the MAC entity does not submit confirmation to the physical layer. |

As described above, if the BS instructs the UE to activate/deactivate the cell DTX/DRX configuration with the group common DCI or the group common MAC CE and the UE does not properly receive the instruction (e.g., DCI missing or decoding failure), misalignment may occur in the transmission/reception operations between the BS and the UE, which may result in damage in terms of energy saving of the BS or the UE. For example, the BS has instructed cell DTX/DRX activation, and thus transmission of a specific DL signal/channel may be turned OFF in advance during the cell DTX inactive duration. However, if the UE does not properly receive the instruction, the UE may continue to monitor while expecting continued reception. Alternatively, during the cell DRX non-active duration, the BS may configure transmission of a specific UL signal/channel to OFF, but the UE may continue to perform UL transmission. Therefore, when the UE receives a cell DTX/DRX activation/deactivation instruction through group-common (GC) DCI/MAC CE, the misalignment problem between the BS and the UE may be reduced by transmitting HARQ-ACK feedback.

When the BS instructs (de)activation with a group common DCI or MAC-CE, the BS may preconfigure a separate PUCCH resource or PUCCH resource set (this may be different from the PUCCH resource (set) configured for HARQ-ACK feedback for general unicast PDSCH reception) to provide feedback on whether the UE has properly received the instruction. Alternatively, the BS may directly indicate the PUCCH resource on which to transmit HARQ-ACK (from among the plurality of resources belonging to the separate PUCCH support set) via GC-DCI/MAC CE indicating (de)activation. Alternatively, if there is no separate PUCCH resource (set) configuration for HARQ-ACK transmission based on (de)activated reception, the UE may transmit HARQ-ACK by using the existing PUCCH resource configuration (e.g., PUCCH resources or resource set configured for transmitting HARQ-ACK for general unicast PDSCH reception).

When GC DCI or MAC-CE for cell DTX/DRX configuration (de)activation instruction indicates a cell index that is not configured by RRC, or when there is no change in the activation/deactivation state for a (configured/invalid) cell index that the UE needs to monitor (for example, when a deactivation instruction is received in the deactivation state), or when all configured cells are in the deactivation state, the UE may not transmit HARQ-ACK feedback. In such cases, whether or not to transmit HARQ-ACK may be configured/instructed/defined (in standards or the like) in advance.

The present disclosure is not limited to transmission and reception of UL and/or DL signals. For example, the present disclosure may also be used for direct communication between UEs. In addition, the term "BS" in the present disclosure may include a relay node as well as a base station. For example, the operations of the BS described in this document may be performed by base stations, but the operations may also be performed by relay nodes.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

### Discontinuous Reception (DRX) Operation

The UE may perform a DRX operation, while performing the afore-described/proposed procedures and/or methods. A UE configured with DRX may reduce power consumption by discontinuously receiving a DL signal. DRX may be performed in an RRC_IDLE state, an RRC_INACTIVE state, and an RRC_CONNECTED stated. DRX is used for discontinuous reception of a paging signal in the RRC_IDLE state and the RRC_INACTIVE state. Now, DRX performed in the RRC_CONNECTED state (RRC_CONNECTED DRX) will be described below.

FIG. 4 is a diagram illustrating a DRX cycle (RRC_CONNECTED state).

Referring to FIG. 4, the DRX cycle includes On Duration and Opportunity for DRX. The DRX cycle defines a time interval in which On Duration is periodically repeated. On Duration is a time period during which the UE monitors to receive a PDCCH. When DRX is configured, the UE performs PDCCH monitoring during the On Duration. When there is any successfully detected PDCCH during the PDCCH monitoring, the UE operates an inactivity timer and is maintained in an awake state. On the other hand, when there is no successfully detected PDCCH during the PDCCH monitoring, the UE enters a sleep state, when the On Duration ends. Therefore, if DRX is configured, PDCCH monitoring/reception may be performed discontinuously in the time domain, when the afore-described/proposed procedures and/or methods are performed. For example, if DRX is configured, PDCCH reception occasions (e.g., slots having PDCCH search spaces) may be configured discontinuously according to a DRX configuration in the present disclosure. On the contrary, if DRX is not configured, PDCCH monitoring/reception may be performed continuously in the time domain, when the afore-described/proposed procedures and/or methods are performed. For example, if DRX is not configured, PDCCH reception occasions (e.g., slots having PDCCH search spaces) may be configured continuously in the present disclosure. PDCCH monitoring may be limited in a time period configured as a measurement gap, irrespective of whether DRX is configured.

Table 6 describes a UE operation related to DRX (in the RRC_CONNECTED state). Referring to Table 6, DRX configuration information is received by higher-layer (RRC) signaling, and DRX ON/OFF is controlled by a DRX command of the MAC layer. Once DRX is configured, the UE may perform PDCCH monitoring discontinuously in performing the described/proposed procedures and/or methods according to the present disclosure, as illustrated in FIG. 4.

**[Table 6]**

| | Type of signals | UE procedure |
|---|---|---|
| 1st step | RRC signalling (MAC- | - Receive DRX configuration information |
| | CellGroupConfig) | |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-OnDurationTimer: defines the length of the starting duration of a DRX cycle.
- Value of drx-InactivityTimer: defines the length of a time duration in which the UE is in the awake state after a PDCCH occasion in which a PDCCH indicating initial UL or DL data has been detected.
- Value of drx-HARQ-RTT-TimerDL: defines the length of a maximum time duration from reception of a DL initial transmission to reception of a DL retransmission.
- Value of drx-HARQ-RTT-TimerDL: defines the length of a maximum time duration from reception of a grant for a DL initial transmission to reception of a grant for a UL retransmission.
- drx-LongCycleStartOffset: defines the time duration and starting time of a DRX cycle.
- drx-ShortCycle (optional): defines the time duration of a short DRX cycle.

When at least one of drx-OnDurationTimer, drx-InactivityTimer, drx-HARQ-RTT-TimerDL, or drx-HARQ-RTT-TimerDL is running, the UE performs PDCCH monitoring in each PDCCH occasion, while staying in the awake state.

### Implementation Examples

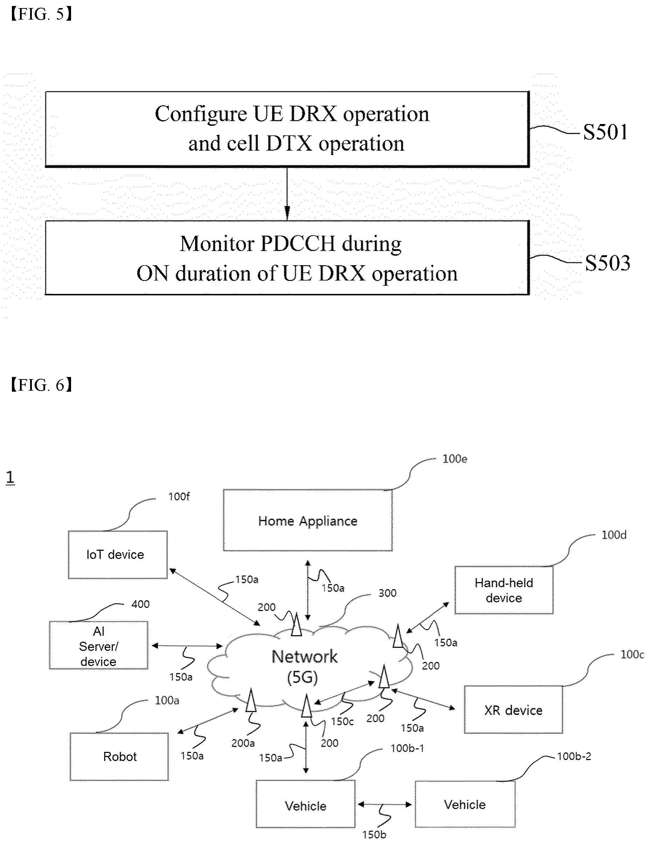

FIG. 5 is a flowchart of a signal transmission and reception method according to embodiments of the present disclosure.

Referring to FIG. 5, embodiments of the present disclosure may be performed by a UE and may include configuring a UE DRX operation and a cell DTX operation (S501), monitoring a PDCCH during an ON duration of the UE DRX operation (S503), and transmitting a PUSCH including a CSI report based on a measurement result for a CSI-RS (S405).

In addition to the operation of FIG. 5, one or more of the operations described through Section 1 may be additionally performed.

For example, referring to Method #4, a combination of active time/inactive time of {Cell DTX, UE C-DRX} may include four time durations such as {ON, ON}, {ON, OFF}, {OFF, ON}, {OFF, OFF} (ON means active time, OFF means inactive time). In particular, when a combination of {Cell DTX, UE C-DRX} is {OFF, ON}, the BS is in the inactive time but the UE is in the active time, and thus it may be a problem whether the UE may monitor or receive the signal as before.

In general, when the UE DRX operation is activated and the UE is in an active time including an ON duration, the UE monitors the PDCCH. However, if the BS transmits the PDCCH with priority given to the UE operation when the cell DTX operation of the BS is activated but the serving cell is not in the cell DTX active time (or active period), it may be difficult for the BS to expect ES gain. As described above, the DRX operation is UE-specific and activated per UE, and thus, if the ON duration of the UEs is configured in TDM format, the BS needs to transmit PDCCH in all sections, and it becomes difficult for cell DTX operation to be meaningful.

Taking this into consideration, in Method #4, a method is proposed in which a UE basically monitors PDCCH during the ON duration of a DRX operation, but does not monitor the PDCCH regardless of the ON duration when the cell DTX operation is activated and the serving cell is not in the cell DTX active period.

However, if the cell DTX operation is configured to option 2 of Method #1, the UE may receive the reference signal in the ON duration even if the cell DTX operation is activated and the serving cell is not in the cell DTX active period. However, if the cell DTX operation is activated and the serving cell is not in the cell DTX active period, the UE does not receive downlink data (e.g., DL-SCH) on the SPS resource.

When the cell DTX operation is activated and the serving cell is in the cell DTX active period, the UE monitors the PDCCH in the ON duration as before. If a PDCCH is received during the ON duration, the UE may start an inactivity timer and maintain it in an awake state. However, the UE does not monitor a PDCCH when the cell DTX is inactive, and thus the awake state may be maintained only during the cell DTX active period.

In addition to the operations of FIG. 5, one or more of the operations described with reference to FIGS. 1 to 4 and the operations described with reference to section 1 may be also performed in combination.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 6 illustrates a communication system 1 applied to the present disclosure.

Referring to FIG. 6, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

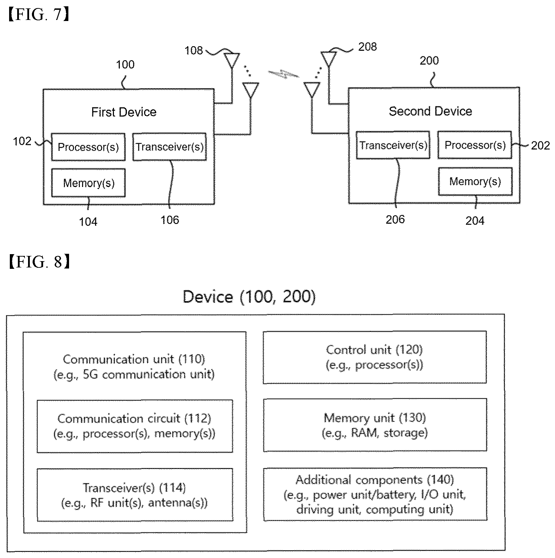

FIG. 7 illustrates wireless devices applicable to the present disclosure.

Referring to FIG. 7, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 6.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 8 illustrates another example of a wireless device applied to the present disclosure. The wireless device may be implemented in various forms according to a use case/service (refer to FIG. 6).

Referring to FIG. 8, wireless devices 100 and 200 may correspond to the wireless devices 100 and 200 of FIG. 7 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 7. For example, the transceiver(s) 114 may include the one or more transceivers 106 and 206 and/or the one or more antennas 108 and 208 of FIG. 7. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 6), the vehicles (100b-1 and 100b-2 of FIG. 6), the XR device (100c of FIG. 6), the hand-held device (100d of FIG. 6), the home appliance (100e of FIG. 6), the IoT device (100f of FIG. 6), a digital broadcasting terminal, a hologram device, a public safety device, an MTC device, a medical device, a FinTech device (or a finance device), a security device, a climate/environment device, the AI server/device (400 of FIG. 6), the BSs (200 of FIG. 6), a network node, or the like. The wireless device may be mobile or fixed according to a use case/service.

In FIG. 8, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

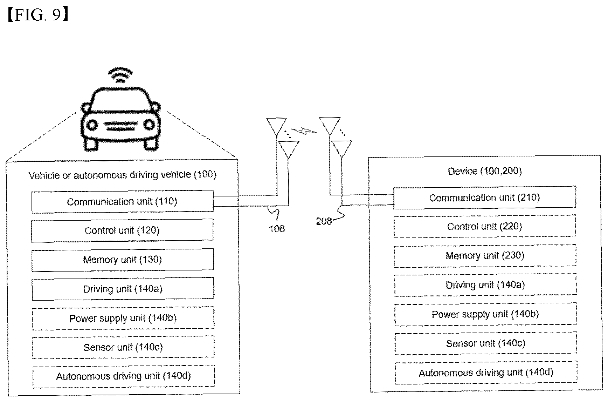

FIG. 9 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 9, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 8, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving a signal by a user equipment (UE) in a wireless communication system, the method comprising:
configuring a UE discontinuous reception (DRX) operation and a cell discontinuous transmission (DTX) operation; and
monitoring a physical downlink control channel (PDCCH) during an ON duration of the UE DRX operation, and skipping the monitoring of the PDCCH regardless of the ON duration based on that the cell DTX operation is activated and a serving cell is not in a cell DTX active period.

2. The method of claim 1, further comprising receiving a reference signal in the ON duration regardless of whether the cell DTX operation is activated and the serving cell is not in the cell DTX active period.

3. The method of claim 1, further comprising monitoring the PDCCH during the ON duration based on that the cell DTX operation is activated and the serving cell is in the cell DTX active period.

4. The method of claim 1, further comprising skipping reception of downlink data in a semi-persistent scheduling (SPS) resource based on that the cell DTX operation is activated and the serving cell is not in the cell DTX active period.

5. The method of claim 1, further comprising operating an inactivity timer and maintaining an awake state based on the PDCCH being received during the ON duration, wherein the awake state is maintained within the cell DTX active period.

6. A user equipment (UE) for transmitting and receiving a signal in a wireless communication system, the UE comprising:
at least one transceiver;
at least one processor; and
at least one memory operably connected to the at least one processor and storing instructions that, when executed, cause the at least one processor to perform a specific operation,
wherein the specific operation includes:
configuring a UE discontinuous reception (DRX) operation and a cell discontinuous transmission (DTX) operation; and
monitoring a physical downlink control channel (PDCCH) during an ON duration of the UE DRX operation, and skipping the monitoring of the PDCCH regardless of the ON duration based on that the cell DTX operation is activated and a serving cell is not in a cell DTX active period.

7. The method of claim 1, further comprising receiving a reference signal in the ON duration regardless of whether the cell DTX operation is activated and the serving cell is not in the cell DTX active period.

8. The method of claim 1, further comprising monitoring the PDCCH during the ON duration based on that the cell DTX operation is activated and the serving cell is in the cell DTX active period.

9. The method of claim 1, further comprising skipping reception of downlink data in a semi-persistent scheduling (SPS) resource based on that the cell DTX operation is activated and the serving cell is not in the cell DTX active period.

10. The method of claim 1, further comprising operating an inactivity timer and maintaining an awake state based on the PDCCH being received during the ON duration, wherein the awake state is maintained within the cell DTX active period.

11. A device for a user equipment (UE), the device comprising:
at least one processor; and
at least one computer memory operably connected to the at least one processor and configured, when executed, to cause the at least one processor to perform an operation,
wherein the operation includes:
configuring a UE discontinuous reception (DRX) operation and a cell discontinuous transmission (DTX) operation; and
monitoring a physical downlink control channel (PDCCH) during an ON duration of the UE DRX operation, and skipping the monitoring of the PDCCH regardless of the ON duration based on that the cell DTX operation is activated and a serving cell is not in a cell DTX active period.

12. A computer-readable nonvolatile storage medium comprising at least one computer program that causes at least one processor to perform an operation, the operation comprising:
configuring a UE discontinuous reception (DRX) operation and a cell discontinuous transmission (DTX) operation; and
monitoring a physical downlink control channel (PDCCH) during an ON duration of the UE DRX operation, and skipping the monitoring of the PDCCH regardless of the ON duration based on that the cell DTX operation is activated and a serving cell is not in a cell DTX active period.
